# EUROPÄISCHE PATENTSCHRIFT

(11) **EP 1 846 515 B1**
(45) Veröffentlichungstag und Bekanntmachung des Hinweises auf die Patenterteilung: **18.07.2012**
(21) Anmeldenummer: 05806359.5
(22) Anmeldetag: 10.11.2005
(51) Int. Cl.: C09D 5/24, C09D 5/08, C09D 175/04, C23C 22/00

(54) **VERFAHREN ZUR BESCHICHTUNG VON METALLBLECH, INSBESONDERE ZINKBLECH**
METHOD FOR COATING SHEET METAL, ESPECIALLY ZINC SHEETS
PROCEDE DE REVETEMENT DE TOLES METALLIQUES, NOTAMMENT DE TOLES DE ZINC

(30) Priorität: 08.02.2005 DE 102005005858
(43) Veröffentlichungstag der Anmeldung: 24.10.2007
(73) Patentinhaber: Henkel AG & Co. KGaA, 40589 Düsseldorf (DE)
(72) Erfinder: KUNZ, Andreas, 42855 Remscheid (DE); WILKE, Eva, 40721 Hilden (DE); LORENZ, Wolfgang, 40699 Erkrath (DE); CLODT, Hans, 45289 Essen (DE)
(86) Internationale Anmeldenummer: PCT/EP2005/012012
(87) Internationale Veröffentlichungsnummer: WO 2006/084491

(56) Entgegenhaltungen:
- EP-A- 0 700 452
- EP-A- 1 479 736
- WO-A-01/23452
- DE-A1- 19 923 084
- US-A- 5 427 632
- US-A- 5 868 872
- US-A- 6 074 495
- US-A1- 2003 175 541
- US-A1- 2003 185 990
- US-A1- 2004 054 044
- US-A1- 2005 037 208

## Beschreibung

Die vorliegende Erfindung betrifft ein Verfahren, mit dem Metalle ausgewählt aus Aluminium und seinen Legierungen, verzinktem oder legierungsverzinktem Stahl und insbesondere Zink oder Zinklegierungen mit einer witterungsbeständigen Schutzschicht versehen werden können. Im Gegensatz zum Beschichten mit einem Lack soll hierbei nach Möglichkeit das metallische Aussehen des Metallsubstrats weitgehend erhalten bleiben. Das Verfahren ist für die vorstehend genannten Metalle und Metalllegierungen geeignet. Es ist insbesondere dafür vorgesehen, Bleche oder Formteile aus solchen Blechen aus Zink oder Zinklegierungen zu beschichten. Stellung und Lösung der erfindungsgemäßen Aufgabe sowie die Vorteile der erfindungsgemäßen Lösung werden daher nachstehend am Beispiel von Zink und Zinklegierungen erläutert.

Die beschichteten Teile aus Zink oder Zinklegierungen sind insbesondere für Verwendungszwecke gedacht, bei denen sie Witterungseinflüssen wie Sonnenlicht und Regen ausgesetzt sind. Durch das Aufbringen der Schutzschicht soll das Herauslösen von Zink aus der Metalloberfläche durch Witterungseinflüsse und damit der Eintrag von Zink in die Umwelt (Wasser und/oder Boden) im Vergleich zum unbeschichteten Zink deutlich verringert werden.

Massive Bänder oder Tafeln aus Zink (wobei hier und im folgenden unter "Zink" auch Zinklegierungen verstanden werden, die zu mindestens 50 Gew.-% aus Zink bestehen) lassen sich beispielsweise durch Walz- oder Gieß-Walz-Verfahren herstellen. Sie werden vorwiegend im Architekturbereich eingesetzt, wobei je nach Anwendungszweck unterschiedliche Form- und Fügeprozesse erforderlich sind. Der häufigste Fügeprozeß für Bauteile aus Zink ist das Löten. Derart erhaltene Zinkbleche und Zinkteile werden beispielsweise im Fassadenbau, als Dächer oder Tore oder als Regenrinnen und Regenfallrohre verwendet. Sie werden also vorwiegend an Stellen eingesetzt, an denen sie Sonnenlicht und Regen ausgesetzt sind. Hierdurch wird einerseits Zink oberflächlich abgetragen, so dass Zinkverbindungen in Wasser und Boden gelangen, teilweise bildet sich jedoch auch eine oberflächliche Patina aus schwerer löslichen Zinkverbindungen, welche die Oberfläche teilweise, jedoch nicht ausreichend vor atmosphärischer Korrosion schützen. Je nach Materialstärke resultieren zusammen mit der Ausbildung einer natürlichen Patina Lebensdauern vieler Jahrzehnte. Dennoch stellt sich die Aufgabe, insbesondere aus Gründen des Umweltschutzes das Auflösen des Zinksubstrats und damit den Eintrag von Zinkverbindungen in die Umwelt weiter zu verlangsamen.

Da die natürliche Patina zum einen die Lebensdauer des Zinksubstrats verlängern und andererseits zu einem erwünschten optisch-ästhetischen Eindruck führen kann, kann die Ausbildung der natürlichen Patina durchaus erwünscht sein. Je nach allgemeiner Bewitterungslage (Klima) und Wetterausrichtung des Zinkobjekts kann die vollständige Ausbildung der natürlichen Patina erst nach einigen Jahren abgeschlossen sein. Dabei können Zwischenzustände entstehen, die sich als fleckige ungleichmäßig ausgebildete Deckschichten zeigen. Dies wird als optisch unschön empfunden. Um die Ausbildung einer Patina-ähnlichen Beschichtung bereits bei der Herstellung zu bewirken, werden fabrikneue Bänder, Bleche oder Teile aus Zink gewünschtenfalls gebeizt. Dieser Prozess wird auch "Vorbewitterung" genannt. Man nimmt hierdurch die homogene Färbung der natürlichen Alterung vorweg. Die resultierende Vorbewitterungsschicht besteht im wesentlichen aus Zinksulfat, -carbonat und -oxiden.

Ein solcher Vorbewitterungsschritt kann dem hier beschriebenen erfindungsgemäßen Beschichtungsverfahren vorangehen. Das erfindungsgemäße Verfahren wird daher vorzugsweise so ausgestaltet, dass die entstehende Schutzschicht zum einen auf der Vorbewitterungsschicht haftet, zum anderen jedoch den optischen Eindruck dieser Vorbewitterungsschicht möglichst wenig überdeckt. Unabhängig davon, ob eine solche Vorbewitterung vorgenommen wird, darf die mit dem erfindungsgemäßen Verfahren aufgebrachte Schutzschicht Umformungs- und Fügeprozesse wie beispielsweise Pressen und Löten nicht behindern. Bei Umformungsprozessen darf sie nicht abplatzen.

In der Praxis wird auf Zink bereits eine Beschichtung auf Acrylatbasis zum temporären Korrosionsschutz aufgetragen. Diese Beschichtung erfüllt jedoch nicht die Aufgabe eines permanenten Korrosionsschutzes, wie er nach dem erfindungsgemäßen Verfahren erzeugt werden soll.

Als Vorbehandlung von Metalloberflächen vor einer Beschichtung auf Basis filmbildender organischer Polymere (Harze) sind sogenannte "Konversionsbehandlungen" weit verbreitet. Hierunter versteht man eine Oberflächenbehandlung, bei der die Metalloberflächen mit einer "Konversionslösung" in Kontakt gebracht wird. Dies enthält Bestandteile, die mit den Metallatomen der zu behandelnden Metalloberfläche schwerlösliche Verbindungen bilden können. Ein Beispiel hierfür ist eine Chromatierung. Hierbei werden die Metalloberflächen mit einer sauren wässrigen Lösung in Kontakt gebracht, die Cr(III)- und/oder Cr(VI)-Verbindungen enthalten. Aus Gründen des Arbeits- und Umweltschutzes nimmt man von solchen Chromatierverfahren zunehmend Abstand. Sie werden häufig ersetzt durch Behandlungsverfahren, bei denen man die Metalloberflächen mit sauren Behandlungslösungen in Kontakt bringt, die komplexe Fluoride eines oder mehrerer der Elemente B, Si, Ti, Zr oder HF enthalten.

So offenbart die US 5,427,632 eine solche chromfreie wässrige Zusammensetzung zur korrosionsschützenden Vorbehandlung, die im sogenannten "Dry-in-Place"-Verfahren auf Metalloberflächen als Nassfilm aufgebracht und anschließend eingetrocknet wird. Die Zusammensetzung enthalten neben Fluorometallaten der Elemente Zr, Ti, Hf, Si und B auch Metall-Kationen von Co, Mg, Mn, Zn, Ni, Sn, Zr, Fe und Cu sowie Oxoanionen von Phosphor und einen wasserlöslichen oder wasserdispergierbaren Harz.

Ebenfalls ein "Dry-in-Place"-Verfahren fürAluminiumoberflächen wird in der US 5,868,872 beschrieben, das auf saure wässrige Zusammensetzungen enthaltend wasserlösliche Verbindungen von Zirkonium und Titan, Orthophosphate, Fluoride und einen organischen Filmbildner auf Basis von (Meth)acrylaten.

Beispielsweise beschreibt das Dokument EP-B-700 452 chromfreie Verfahren zur Vorbehandlung von Oberflächen aus Aluminium vor einer zweiten, endgültig korrosionsschützenden Konversionsbehandlung. Hierbei bringt man die Oberflächen mit einer sauren wässrigen Behandlungslösung in Kontakt, die komplexe Fluoride der Elemente B, Si, Ti, Zr oder HF einzeln oder im Gemisch miteinander in Konzentrationen der Fluoro-Anionen von insgesamt zwischen 100 und 4 000 mg/l enthalten und einen pH-Wert zwischen 0,3 und 3,5 aufweisen. Einleitend hierzu zitiert dieses Dokument eine ganze Reihe weiterer Fundstellen, in denen chromfreie Konversionslösungen beschrieben sind. Hierzu wird insbesondere auf die Seite 3 des genannten Dokuments verwiesen. Gemäß den dort zitierten Fundstellen können die Konversionslösungen außer den komplexen Fluoriden filmbildende organische Polymere wie beispielsweise Polyacrylsäure oder deren Salze oder Ester enthalten. Weiterhin geht aus den dort zitierten Fundstellen hervor, dass die Konversionslösungen als filmbildende Polymere Polyvinylphenolverbindungen enthalten können, die durch Umsetzung von Poly(vinylphenol) mit Aldehyden und organischen Aminen erhältlich sind.
Weitere Beispiele für Konversionslösungen, mit denen Metalloberflächen vor den Aufbringen einer permanent korrosionsschützenden organischen Beschichtung vorbehandelt werden können, können der DE-A-199 23 084 und der hierin zitierten Literatur entnommen werden. Nach dieser Lehre kann ein chromfreies wässriges Konversionsmittel außer Hexafluoro-Anionen von Ti, Si und/oder Zr als weitere Wirkstoffe enthalten: Phosphorsäure, eine oder mehrere Verbindungen von Co, Ni, V, Fe, Mn, Mo oder W, ein wasserlösliches oder wasserdispergierbares filmbildendes organisches Polymer oder Copolymer und Organophosphonsäuren, die komplexierende Eigenschaften haben. Auf Seite 4 dieses Dokuments ist in Zeilen 17 bis 39 eine ausführliche Liste organischer filmbildender Polymere aufgeführt, die in den genannten Konversionslösungen enthalten sein können. Im Anschluss hieran offenbart dieses Dokument eine sehr umfangreiche Liste komplex-bildender Organophosphonsäuren als weitere mögliche Komponenten der Konversions-lösungen.

Ebenfalls im Stand der Technik bekannt sind Vorbehandlungsverfahren, in denen in einem Schritt eine gemischt anorganisch-organische Beschichtung mit einer Schichtdicke im Bereich einiger Mikrometer auf Metalloberflächen, vorzugsweise auf Metallband, aufgebracht wird, die zudem als Lackhaftgrund dienen kann.

Die US 20040054044 beschreibt ein solches Verfahren, bei dem die Metalloberfläche mit einer wässrigen Zusammensetzung enthaltend einen organischen Filmbildner, Kationen und/oder Hexafluorometallate der Elemente Ti, Zr, Hf, Si, Al und B sowie nanopartikuläre anorganische Verbindungen. Der organische Filmbildner kann dabei unter anderen ausgewählt sein aus Polyurethanen.

Weiterhin ist es bekannt, auf ggf. im Sinne einer Konversionsbehandlung vorbehandelte Metalloberflächen organische Beschichtungen aufzubringen, die als filmbildende Komponente u.a. ein Polyurethanharz bzw. ein Präpolymer hierfür enthalten. Hierfür seinen folgende Beispiele genannt:
Die US 6,074,495 beispielsweise betrifft die Aufbringung einer wässrigen Lösung eines Polyurethans auf korrosionsschützend vorbehandeltem Aluminium, wobei die Polyurethan-Lösung 5-15 Gew.-% eines wasserdispergierbaren Polyurethan-Harzes und 0,1-56 Gew.-% eines Härters enthält. Es wird demnach ein Beschichtungsverfahren bereitgestellt, das neben Korrosionsschutz, Lackhaftung und Überlackierbarkeit auch eine gute Temperaturbeständigkeit aufweist. Insbesondere kann der Einsatz von Dichromaten in der Vorbehandlung der Aluminiumsubstrate reduziert werden.

Das Dokument WO 01/23452 offenbart eine wässrige Zusammensetzung zur Beschichtung von Edelstahl, enthaltend a) mindestens ein dispergiertes Polyurethanpräpolymer mit zumindest teilweise blockierten Isocyanatgruppen, b) mindestens eine weitere vernetzungsfähige Polymerdispersion oder Polymerlösung und c) ggf. Netz- und Dispergierhilfsmittel und Verlaufshilfsmittel. Das dispergierte blockierte Polyurethanpräpolymer kann aus niedermolekularen Polyolen und aliphatischen Diisocyanaten aufgebaut sein. Das Blockierungsmittel für die Isocyanatgruppen kann ausgewählt sein aus Aldoximen, Ketoximen, Lactamen, Imidazolverbindungen, ß-Dicarbonylverbindungen, Alkoholen, Phenolen, Thioalkoholen, Thiophenolen, sekundären Aminen, Amiden, Imiden oder Hydroxamsäureestern. Weiterhin enthält dieses Dokument in seinem Anspruch 4 eine Liste von Beispielen von aliphatischen oder cycloaliphatischen Diisocyanaten als Bestandteile des Polyurethanpräpolymers. Das vernetzungsfähige Polymer b) kann beispielsweise ausgewählt sein aus reaktiven (Meth)acrylatcopolymeren, Polyurethandispersionen auf Polyesterol-, Polycarbonat- oder Polyetherbasis. Dieses Mittel ist insbesondere dafür gedacht, als dünne schmutzabweisende Beschichtung auf Edelstahloberflächen aufgetragen zu werden.

Das Dokument WO 03/035280 offenbart oberflächenbeschichtete Al/Zn-Stahlbleche und ein entsprechendes Oberflächenbeschichtungsmittel. Der Kern dieser Offenbarung liegt darin, dass auf der Oberfläche eines solchen Stahlblechs eine Beschichtung ausgebildet wird, die als Hauptbestandteil ein Säureamidbindungen enthaltendes Harz enthält. Dieses Harz kann beispielsweise ein Urethanharz sein. Als weitere fakultative Komponenten dieses Beschichtungsmittels werden beispielsweise Kieselsäure, Kieselsäuresalze, kolloides Siliciumdioxid und Silan-Kupplungsreagenzien genannt.

Aus EP-A-1 479 736 sind korrosionsschützende Beschichtungen für Stahlbänder bekannt, die ein Trägermaterial und eine korrosionsinhibierende Menge einer zum Kationenaustausch befähigten Matrix enthalten, wobei diese Kationenaustausch-befähigte Matrix Kationen enthält, die unlösliche Niederschläge mit Hydroxylionen bilden. Diese Matrix kann beispielsweise aus natürlichen oder künstlichen Schichtsilikaten bestehen. Als austauschfähige Kationen können vorliegen: Ca, Ce, Sr, La, Y, Al oder Mg.

Aus der US 2003175541 geht ein Verfahren zur Applikation einer schweißbaren vor Korrosion schützenden organischen Erstbeschichtung hervor, wobei die organische Beschichtung zur Verbesserung des Korrosionsschutzes auch auf bereits konversionsbehandelten, also phosphatierten oder chromfrei vorbehandelten Metalloberflächen vollzogen werden kann. Das Beschichtungsmittel enthält dabei ein organisches Bindemittelsystem bestehend aus einem Epoxid-Harz und einem Härter, wobei optional auch monomere Isocyanate enthalten sein können, auf die jedoch als besonderer Vorteil der technischen Lehre der US 2003175541 verzichtet werden kann.

Auch die US 20030185990 offenbart eine UV-härtbare Lackformulierung zur Beschichtung von Metallband vor einer nachfolgenden Umformung, die eine wässrige Dispersion verschiedener Filmbildner beispielsweise auf Basis von Acrylat, Epoxid, Phenol, Polyethylen, Polyurethan, Polyester und Styrol darstellt. Die Applikation der Lackformulierung kann ebenfalls auf bereits korrosionsschützend vorbehandeltem Metallband erfolgen.

Die Aufgabe der vorliegenden Erfindung besteht darin, ein spezielles Beschichtungsverfahren für Oberflächen von Blechen oder Bauteilen aus Massivzink zur Verfügung zu stellen, das die weiter oben genannten Anforderungen erfüllt. Vorzugsweise kann dieses Beschichtungsverfahren jedoch auch für andere Metalle als Zink wie beispielsweise Aluminium und seine Legierungen sowie für verzinkten oder legierungsverzinkten Stahl eingesetzt werden. Dies gilt insbesondere dann, wenn auch diese Materialien Sonnenlicht und Witterungseinflüssen ausgesetzt werden sollen. Die Anwendung des nachstehend beschriebenen Verfahrens auf Zink und Zinklegierungen stellt daher die bevorzugte Ausführungsform der Erfindung dar.

Die Lösung dieser Aufgabe besteht in einem Verfahren zur Beschichtung von Metallen ausgewählt aus Aluminium und seinen Legierungen, Zink und seinen Legierungen sowie verzinktem oder legierungsverzinktem Stahl, wobei man das Metall erforderlichenfalls reinigt,
a) einer als solche im Stand der Technik bekannten Konversionsbehandlung durch Kontakt mit einer Konversionslösung unterzieht, die mindestens ein einfaches oder komplexes Salz mindestens eines Metalls M enthält, wobei eine Konversionsschicht erzeugt wird, die 0,01 bis 0,7 mmol/m² des Metalls M enthält,
b) erwünschtenfalls mit Wasser spült und/oder trocknet,
c) mit einem Beschichtungsmittel in Kontakt bringt, das
   c1) insgesamt 5 bis 30 Gew.-% eines oder mehrerer aliphatischer vernetzender Einbrennurethanharze, die blockierte Isocyanat-Gruppen tragen, wobei nicht mehr als 5 % der vorhandenen Kohlenstoffatome in aromatischen und/oder ungesättigten Gruppierungen vorliegen,
   c2) insgesamt 10 bis 30 Gew.-% eines oder mehrerer Vernetzungsmittel für die Komponente c1,
   c3) 4 bis 30 Gew.-% eines oder mehrerer Korrosionsschutzpigmente,
   und als Rest eines oder mehrere organische Lösungsmittel und/oder Wasser sowie erwünschtenfalls weitere Wirk- oder Hilfsstoffe enthält,
   und danach
d) die im Teilschritt c) erhaltene Beschichtung durch Erwärmen auf mindestens 100 °C Substrattemperatur aushärtet.

Im Teilschritt a) kann eine chromhaltige oder vorzugsweise chromfreie Konversionslösung eingesetzt werden, wie sie aus dem einleitend zitierten Stand der Technik bekannt ist. Durch Wahl von Verfahrensparametern wie beispielsweise Behandlungstemperatur, Behandlungsdauer und Kontaktzeit kann sicher gestellt werden, dass eine Konversionsschicht erzeugt wird, die pro m² Oberfläche 0,01 bis 0,7 mmol des Metalls M enthält, das die wesentliche Komponente der Konversionslösung darstellt. Beispiele für Metalle M sind Cr(III), Cr(VI), B, Si, Ti, Zr, Hf. Die Belegungsdichte der Zinkoberfläche mit dem Metall M kann beispielsweise mit einer Röntgenfluoreszenzmethode ermittelt werden.

Für den Teilschritt a) sind solche Konversionslösungen bevorzugt, die keine absichtlich zugesetzten Silane enthalten. Zumindest soll der Silangehalt nicht mehr als 10 ppm bezogen auf die Konversionslösung betragen. Bei höheren Silangehalten besteht die Gefahr, dass die im nachfolgenden Teilschritt c) aufgebrachte organische Beschichtung abspringt.

Die Konversionslösung im Teilschritt a) ist aus ökologischen Gründen vorzugsweise frei von Chrom. Vorzugsweise verwendet man für diesen Schritt eine wässrige chromfreie Lösung, die das Metall M in Form komplexer Fluoride enthält. Dabei sind als Metall M Ti, Zr oder Mischungen hieraus bevorzugt. Die Behandlungslösung kann jedoch auch komplexe Fluoride von B, Si und/oder HF enthalten. Weitere fakultative Komponenten sind die in dem vorstehend zitierten Dokument DE-A-199 23 084 genannten Komponenten: Phosphorsäure, Verbindungen von Co, Ni, V, Fe, Mn, Mo oder W, ein wasserlösliches oder wasserdispergierbares filmbildendes organisches Polymer oder Copolymer sowie komplexbildende Organophosphonsäure. Konkrete Beispiele dieser Komponenten können der genannten DE-A-199 23 084 entnommen werden.

Besonders bevorzugt werden im Teilschritt a) saure wässrige Konversionslösungen eingesetzt, die neben komplexen Fluoriden von Ti und/oder Zr organische Polymere enthalten, die ausgewählt sind aus Aminogruppen enthaltenden Homo- oder Copolymer-Verbindungen, umfassend wenigstens ein Polymer, das aus der Gruppe ausgewählt ist, bestehend aus a), b), c) oder d), worin:
a) ein Polymermaterial umfaßt, das wenigstens eine Einheit der Formel: 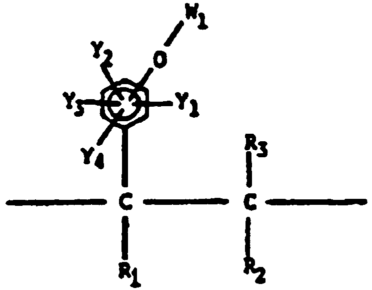 hat, worin:
   R₁ bis R₃ unabhängig für jede der Einheiten aus der Gruppe ausgewählt werden, bestehend aus Wasserstoff, einer Alkylgruppe mit 1 bis 5 Kohlenstoffatomen oder einer Arylgruppe mit 6 bis 18 Kohlenstoffatomen;
   Y, bis Y₄ unabhängig für jede der Einheiten aus der Gruppe ausgewählt werden bestehend aus Wasserstoff, -CR₁₁R₅OR₆, -CH₂Cl oder einer Alkyl- oder Arylgruppe mit 1 bis 18 Kohlenstoffatomen oder Z: 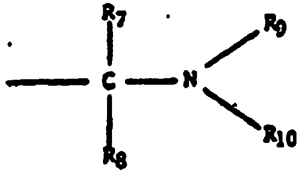 oder 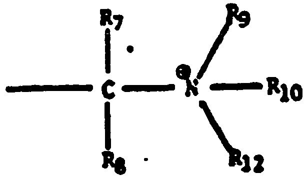 ist, jedoch wenigstens eine Fraktion des Y₁, Y_{2,} Y₃ oder Y₄ der Homo- oder Copolymer-Verbindung oder -material Z sein muß: R₅ bis R₁₂ unabhängig für jede der Einheiten aus der Gruppe ausgewählt werden, bestehend aus Wasserstoff, einer Alkyl-, Ary-, Hydroxyalkyl-, Aminoalkyl-, Mercaptoalkyl- oder Phosphoalkylgruppe;
   R₁₂ kann auch -O⁽⁻¹⁾ oder -OH sein;
   W, unabhängig für jede der Einheiten aus der Gruppe ausgewählt ist, bestehend aus Wasserstoff, einer Acyl-, einer Acetyl-, einer Benzoylgruppe; 3-Allyloxy-2-hydroxy-propyl; 3-Benzyloxy-2-hydroxy-propyl; 3-Butoxy-2-hydroxy-propyl-; 3-Alkyloxy-2-hydroxy-propyl-; 2-Hydroxyoctyl-; 2-Hydroxyalkyl-; 2-Hydroxy-2-phenylethyl-; 2-Hydroxy-2-alkyl-phenylethyl-; Benzyl-; Methyl-; Ethyl-; Propyl-; Alkyl-; Allyl-; Alkylbenzyl-; Haloalkyl-; Haloalkenyl-; 2-Chlorpropenyl-; Natrium; Kalium; Tetraarylammonium; Tetraalkylammonium; Tetraalkylphosphonium; Tetraarylphosphonium oder ein Kondensationsprodukt des Ethylenoxids, Propylenoxids oder einer Mischung oder eines Copolymer derselben;
b) umfaßt:
   ein Polymermaterial mit wenigstens einer Einheit der Formel: 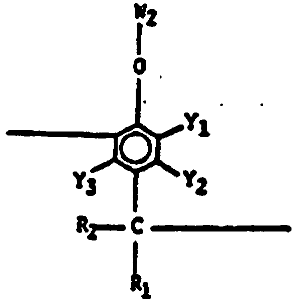 worin:
      R₁ bis R₂ unabhängig für jede der Einheiten aus der Gruppe ausgewählt werden, bestehend aus Wasserstoff, einer Alkylgruppe mit 1 bis 5 Kohlenstoffatomen oder einer Arylgruppe mit 6 bis 18 Kohlenstoffatomen;
      Y₁ bis Y₃ unabhängig für jeder der Einheiten aus der Gruppe ausgewählt werden bestehend aus Wasserstoff, -CR₄R₅OR₆, -CH₂Cl oder einer Alkyl- oder Arylgruppe mit 1 bis 18 Kohlenstoffatomen oder Z: 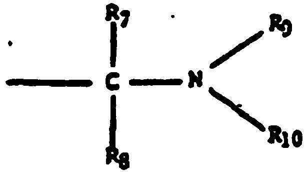 oder 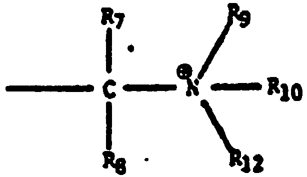 ist, jedoch wenigstens eine Fraktion des Y_{1,} Y₂ oder Y₃ der Endverbindung Z sein muß; R₄ bis R₁₂ unabhängig für jede der Einheiten aus der Gruppe ausgewählt werden, bestehend aus Wasserstoff, einer Alkyl-, Aryl-, Hydroxyalkyl-, Aminoalkyl-, Mercaptoalkyl- oder Phosphoalkylgruppe; R₁₂ kann auch -O⁽⁻¹⁾ oder -OH sein;
      W₂ unabhängig für jede der Einheiten aus der Gruppe ausgewählt ist, bestehend aus Wasserstoff, einer Acyl-, einer Acetyl-, einer Benzoylgruppe; 3-Allyloxy-2-hydroxy-propyl; 3-Benzyloxy-2-hydroxy-propyl-; 3-Alkylbenzyloxy-2-hydroxy-propyl-; 3-Phenoxy-2-hydroxy-propyl; 3-Alkylphenoxy-2-hydroxy-propyl; 3-Butoxy-2-hydroxy-propyl; 3-Alkyloxy-2-hydroxy-propyl; 2-Hydroxyoctyl-; 2-Hydroxylalkyl-; 2-Hydroxy-2-phenylethyl-; 2-Hydroxy-2-alkyl-phenylethyl-; Benzyl-; Methyl-; Ethyl-; Propyl-; Alkyl-; Allyl-; Alkylbenzyl-; Haloalkyl- ; Haloalkenyl-; 2-Chlorpropenyl- oder ein Kondensationsprodukt des Ethylenoxids, Propylenoxids oder einer Mischung derselben;
c) umfaßt:
   ein Copolymer-Material, worin wenigstens ein Teil des Copolymers die Struktur 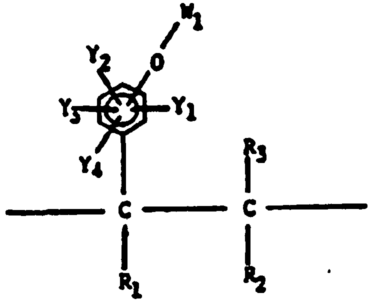 hat und wenigstens eine Fraktion des genannten Teils mit einem oder mehreren Monomeren polymerisiert ist, die unabhängig für jede Einheit ausgewählt sind aus der Gruppe, bestehend aus Acrylnitril, Methacrylnitril, Methylacrylat, Methylmethacrylat, Vinylacetat, Vinylmethylketon, Isopropenylmethylketon, Acrylsäure, Methacrylsäure, Acrylamid, Methacrylamid, n-Amylmethacrylat, Styrol, m-Bromstyrol, p-Bromstyrol, Pyridin, Diallyldimethylammonium-Salze, 1,3-Butadien, n-Butylacrylat, tert.-Butylaminoethylmethacrylat, n-Butylmethacrylat, tert. Butylmethacrylat, n-Butylvinylether, tert.-Butylvinylether, m-Chlorstyrol, o-Chlorstyrol, p-Chlorstyrol, n-Decylmethacrylat, N,N-Diallymelamin, N,N-Di-n-Butylacrylamid, Di-n-Butylitaconat, Di-n-Butylmaleat, Diethylaminoethylmethacrylat, Diethylenglycol-Monovinylether, Diethylfumarat, Diethylitaconat, Diethylvinylphosphat, Vinylphosphonsäure, Diisobutylmaleat, Diisoproylitaconat, Diisopropylmaleat, Dimethylfumarat, Dimethylitaconat, Dimethylmaleat, Di-n-Nonylfumarat, Di-n-Nonylmaleat, Dioctylfumarat, Di-n-Octylitaconat, Di-n-Propylitaconat, N-Dodecylvinylether, saures Ethylfumarat, saures Ethylmaleat, Ethylacrylat, Ethylcinnamat, N-Ethylmethacrylamid, Ethylmethacrylat, Ethylvinylether, 5-Ethyl-2-vinylpyridin, 5-Ethyl-2-vinylpyridin-1-oxid, Glycidylacrylat, Glycidylmethacrylat, n-Hexylmethacrylat, 2-Hydroxyethylmethacrylat, 2-Hydroxypropylmethacrylat, lsobutylmethacrylat, Isobutylvinylether, Isopren, Isoproylmethacrylat, lsoproylvinylether, Itaconsäure, Laurylmethacrylat, Methacrylamid, Methacrylsäure, Methacrylnitril, N-Methylolacrylamid, N-Methylolmethacrylamid, N-Isobutoxymethylacrylamid, N-Isobutoxymethylmethacrylamid, N-Alkyloxymethylacrylamid, N-Alkyloxymethylmethacrylamid, N-Vinylcaprolactam, Methylacrylat, N-Methylmethacrylamid, α-Methylstyrol, m-Methylstyrol, o-Methylstyrol, p-Methylstyrol, 2-Methyl-5-vinylpyridin, n-Propylmethacrylat, Natrium-p-styrolsulfonat, Stearylmethacrylat, Styrol, p-Styrolsulfonsäure, p-Styrolsulfonamid, Vinylbromid, 9-Vinylcarbazol, Vinylchlorid, Vinylidenchlorid, 1-Vinylnaphthalin, 2-Vinylnaphtalin, 2-Vinylpyridin, 4-Vinylpyridin, 2-Vinylpyridin-N-oxid, 4-Vinylpyrimidin, N-Vinylpyrrolidon; und W₁, Y₁-Y₄ und R₁-R₃ wie unter a) beschrieben sind;
d) umfaßt ein Kondensationspolymer aus den polymeren Materialien a), b) oder c), wobei eine kondensierbare Form von a), b), c) oder eine Mischung derselben mit einer zweiten Verbindung kondensiert wird, die ausgewählt ist aus der Gruppe bestehend aus Phenolen, Tanninen, Novolak-Harzen, Lignin-Verbindungen, zusammen mit Aldehyden, Ketonen oder deren Mischungen, um ein Kondensationsharz-Produkt herzustellen, wobei das Kondensationsharz-Produkt durch Zugabe von "Z" zu wenigstens einem Teil desselben, durch Reaktion des Harzproduktes mit 1) einem Aldehyd oder Keton 2) einem sekundären Amin dann weiter reagiert, unter Bildung eines Endaddukts, das mit einer Säure reagieren kann.

Verfahren zur Herstellung derartiger Polymere sind in den Druckschriften EP-B-319 016 und EP-B-319 017 beschrieben. Polymere dieser Art können bezogen werden von der Henkel Corporation, USA, unter den Handelsnamen Parcolene^{®} 95C, Deoxylyte^{®} 90A, 95A, 95AT, 100NC und TD-1355-CW.

Dabei sind insbesondere solche Polymere bevorzugt, bei denen wenigestens eine Fraktion der Gruppen Z des organischen Polymers eine Polyhydroxyalkylamin-Funktionalität aufweist, die aus der Kondensation eines Amins oder von Amoniak mit einer Ketose oder Aldose stammt, die 3 bis 8 Kohlenstoff-Atome aufweist. Dabei können die Kondensationsprodukte erwünschtenfalls zum Amin reduziert worden sein.

Weitere Beispiele derartiger Polymere sind Kondensationsprodukte eines Polyvinylphenols mit Formaldehyd oder Paraformaldehyd und mit einem sekundären organischen Amin. Vorzugsweise geht man dabei von Polyvinylphenolen mit einer Molmasse im Bereich von etwa 1.000 bis etwa 10.000 aus. Dabei sind insbesondere solche Kondensationsprodukte bevorzugt, bei denen das sekundäre organische Amin ausgewählt ist aus Methylethanolamin und N-Methylglucamin.

Beispielsweise ist für die Konversionsbehandlung im Teilschritt a) ein Produkt geeignet, das von der Henkel KGaA, Düsseldorf, unter dem Handelsnamen Granodine^{R} 1456 vertrieben wird. Dieses enthält Hexafluorosäuren von Titan und Zirkon, Phosphorsäure, Manganionen, organische Phosphonsäure (1-Hydroxyethan-1,1,-diphosphonsäure) sowie organisches Polymer gemäß den vorstehend zitierten Druckschriften EP-B-319 016 und EP-319 017. Besonders bevorzugt wird ein Polymer ausgewählt, das N-Methylglucamingruppen enthält.

Die Konversionslösung im Teilschritt a) hat vorzugsweise eine Temperatur im Bereich zwischen 10 und 50 °C, insbesondere zwischen 15 und 35 °C. Die Kontaktzeit der Konversionslösung mit der Metalloberfläche (definiert als entweder die Zeit vom Beginn des Kontaktes bis zum Beginn einer Wasserspülung oder die Zeit vom Beginn des Kontaktes bis zu Beginn der Trocknung) kann im Bereich von 1 Sekunde bis 2 Minuten liegen. Da man das gesamte Verfahren vorzugsweise an laufenden Metallbändern durchführt, sind Kontaktzeiten bevorzugt, wie sie für Bandbehandlungen üblich sind. Dies sind Kontaktzeiten im Bereich von 2 bis 20 Sekunden.

Nach Ende der Kontaktzeit kann mit Wasser gespült und anschließend getrocknet werden. Eine Wasserspülung ist besonders dann empfehlenswert, wenn man das erfindungsgemäße Behandlungsverfahren an vorgeformten Teilen durchführt. In diesem Fall erfolgt der Kontakt mit der Konversionslösung vorzugsweise durch Eintauchen oder durch Besprühen mit der Lösung. Wenn man, wie bevorzugt, die erfindungsgemäße Verfahrensfolge an laufenden Metallbändern durchführt, ist es jedoch bevorzugt, im Teilschritt a) die Konversionslösung durch Walzenauftrag aufzubringen und danach nicht zu spülen, sondern direkt zu trocknen (no-rinse-Verfahren). Die Trocknung erfolgt vorzugsweise als Lufttrocknung bei 60 bis 90 °C Substrattemperatur (peak-metaltemperature, PMT).

Im Teilschritt c) bringt man vorzugsweise eine solche Menge des Beschichtungsmittels auf, dass man nach dem Aushärtungsschritt d) eine Schichtdicke im Bereich von 3 bis 35 µm, vorzugsweise im Bereich von 6 bis 20 µm erhält. Die Schichtdicke kann durch die Auftragsweise des Beschichtungsmittels und durch dessen Viskosität geregelt werden. Die Viskosität ist in erster Linie eine Funktion des Festkörpergehalts des Beschichtungsmittels und kann über diesen eingestellt werden. Bei vorgeformten Teilen kann die Beschichtung im Teilschritt d) durch Eintauchen oder durch Besprühen mit dem Beschichtungsmittel erfolgen. Führt man, wie bevorzugt, das erfindungsgemäße Verfahren an laufenden Metallbändern durch, ist ein Walzenauftragsverfahren besonders bevorzugt. Der Auftrag kann jedoch auch durch Besprühen des Bandes mit dem Beschichtungsmittel bzw. Durchleiten des Bandes durch ein Bad mit dem Beschichtungsmittel und jeweils anschließendem Abquetschen mit Abquetschwalzen erfolgen. Die Kontaktzeit (wie vorstehend beim Teilschritt a) definiert) beträgt vorzugsweise 2 bis 20 Sekunden. Im Teilschritt d) wird die im Teilschritt c) erhaltene Beschichtung durch Erwärmen auf mindestens 100 °C Substrattemperatur (PMT) ausgehärtet. Vorzugsweise beträgt die Substrattemperatur (PMT) nicht mehr als 210 °C.

Das Erwärmen auf die erforderliche Substrattemperatur (PMT) kann beispielsweise durch Infrarotstrahlung oder vorzugsweise in einem Umluft-Trockenofen erfolgen. Als Dauer des Aushärtens genügt die Zeitspanne, die für das Erreichen der PMT erforderlich ist.

Das vernetzende Einbrennurethanharz c1) liegt vorzugsweise als Suspension oder Lösung eines Präpolymers vor, das blockierte Isocyanatgruppen trägt. Um die erforderliche Widerstandsfähigkeit gegen Sonnenstrahlung zu erreichen, muss das Urethanharz zumindest weitgehend aliphatische Kohlenwasserstoffketten aufweisen. Aromatische und/oder ungesättigte Gruppierungen sollen möglichst vermieden werden. In diesem Sinne wird hier ein Urethanharz als aliphatisch bezeichnet, wenn nicht mehr als 5 %, vorzugsweise nicht mehr als 1 % der vorhandenen Kohlenstoffatome in aromatischen und/oder ungesättigten Gruppierungen vorliegen.

Vorzugsweise ist die Komponente c1) eine Zubereitung eines Polyurethanprepolymers, das im wesentlichen keine freien Isocyanatgruppen mehr enthält. Dieses Polyurethanprepolymer wird in an sich bekannter Weise aus hydroxyfunktionellen Polyestern oder hydroxyfunktionellen Acrylaten und aliphatischen oder cycloaliphatischen Polyisocyanaten aufgebaut. Die hierfür einzusetzenden aliphatischen oder cycloaliphatischen Polyisocyanate werden vorzugsweise ausgewählt aus der Gruppe 4,4'-Dicyclohexylmethandiisocyanat (H₁₂MDI), 1-Isocyanatomethyl-3-Isocyanato-1,5,5-Trimethyl-cyclohexan (Isophoron-diisocyanat, IPDI), Cyclohexan-1,4-diisocyanat, hydriertes Xylylen-diisocyanat (H₆XDI), 1-Methyl-2,4-diisocyanato-cyclohexan, m- oder p-Tetramethylxylendiisocyanat (m-TMXDI, p-TMXDI), Dimerfettsäure-Diisocyanat, Tetramethoxybutan-1,4-diisocyanat, Butan-1,4-diisocyanat, Hexan-1,6-diisocyanat (HDI, wie hier besonders bevorzugt), 1,6-Diisocyanato-2,2,4-trimethylhexan, 1,6-Diisocyanato-2,4,4-trimethylhexan sowie 1, 12-Dodecandiisocyanat (C₁₂DI). Ggf. können auch die entsprechenden trimeren Biuretisierungs- bzw. Isocyanuratisierungs-Produkte der vorgenannten Diisocyanate verwendet werden.

Als Polyole sind Polyester mit Molekulargewichten zwischen 400 und 10000, vorzugsweise zwischen 400 und 5000 geeignet, die durch Kondensation von Di- bzw. Tricarbonsäuren, wie z.B. Adipinsäure, Sebacinsäure, Glutarsäure, Azelainsäure, Korksäure, 3,3-Dimethylglutarsäure,Terephthalsäure, Isophthalsäure, Hexahydrophthalsäure oder Dimerfettsäure mit niedermolekularen Diolen bzw. Triolen wie z.B. Ethylenglykol, Propylenglykol, Diethylenglykol, Triethylenglykol, Dipropylenglykol, 1,4-Butandiol, 1,6-Hexandiol, 1,10-Decandiol, Dimerfettalkohol, Glyzerin oder Trimethylolpropan hergestellt werden können. Eine weitere Gruppe der erfindungsgemäß einzusetzenden Polyole sind die Polyester auf der Basis von ε-Caprolacton, auch "Polycaprolactone" genannt. Auch hydroxyfunktionelle Polycarbonate lassen sich als Polyolkomponente für die erfindungsgemäß einzusetzende Polyurethan-Zubereitung verwenden.

Es können aber auch Polyesterpolyole oleochemischer Herkunft verwendet werden. Derartige Polyesterpolyole können beispielsweise durch vollständige Ringöffnung von epoxidierten Triglyzeriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglyzerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate. Die Polytetramethylenglykole, die z.B. durch die saure Polymerisation von Tetrahydrofuran hergestellt werden, sind ebenfalls als Polyole zumindest mitverwendbar. Dabei liegt der Molekulargewichtsbereich der Polytetramethylenglykole zwischen 200 und 6000, vorzugsweise im Bereich von 400 bis 4000.

Ebenso können die an sich bekannten hydroxyfunktionellen Acrylate bzw. Methacrylate als Polyol eingesetzt werden, ihre Molekulargewichtsbereiche liegen zwischen etwa 400 und 10000.

Die Molekulargewichte der genannten Rohstoffe werden von deren Hersteller in der Regel ohne Angabe der Bestimmungsmethode angegeben. Es sind diejenigen Rohstoffe geeignet bzw. bevorzugt, für die die Hersteller die entsprechenden Molekulargewichte bzw. Molekulargewichtsbereiche angeben.

Falls die Polyurethanzubereitungen wässrige Systeme darstellen oder in solche eingearbeitet werden sollen, haben die Polyurethanprepolymeren in der Regel keine freien Isocyanatgruppen, sondern sie sind zumindest zum großen Teil mit Hilfe von Blockierungsmitteln blockiert. Diese Blockierungsmittel können ausgewählt werden aus aus Aldoximen, Ketoximen, Laktamen, Imidazolverbindungen, β-Dicarbonylverbindungen wie z.B. Malonsäure-dialkylester oder Acetessigester. Weitere an sich bekannte Blockierungsmittel können Alkohole, Phenole, insbesondere Alkylphenole, Thioalkohole, Thiophenole, sekundäre Amine, Amide, Imide oder Hydroxamsäureester sein. Diese Blockierungsgruppen werden dann beim Aushärten bzw. Vernetzen des Bindemittelsystems, ggf. unter Mitwirkung von Katalysatoren, freigesetzt, so daß die dann frei werdenden Isocyanatgruppen mit anderen reaktiven Gruppen wie Hydroxylgruppen, Aminogruppen aus anderen Bindemittelbestandteilen reagieren können und so zum Molekulargewichtsaufbau bzw. zur Vernetzung des Bindemittelsystems beitragen.

Vorzugsweise setzt man ein Polyurethan-Präpolymer ein, dessen Isocyanatgruppen mit einer Schutzgruppe blockiert sind, die bei einer Temperatur im Bereich von 100 bis 180 °C abspaltet. Hierdurch wird gewährleistet, dass beim Erwärmen auf die PMT im Teilschritt d) die Schutzgruppe abspaltet, so dass die Beschichtung durch Reaktion des Urethanharzes mit dem Vernetzungsmittel c2) aushärten kann.
Bevorzugte Blockierungsmittel mit dieser Eigenschaft sind Phenole, Caprolactam, spezielle Amine sowie Oxime. Schutzgruppe bzw. TMP beim Aushärten sind so aufeinander abzustimmen, dass die Schutzgruppe unterhalb der PMT abspaltet.

Das Vernetzungsmittel c2) reagiert während des Aushärtens im Teilschritt d) mit den endblockierten Isocyanatgruppen des Einbrennurethanharzes, wodurch das gesamte organische Bindemittelsystem aushärtet. Das Vernetzungsmittel muss daher Gruppen aufweisen, die reaktiv gegenüber endblockierten Isocyanatgruppen sind. Dies sind insbesondere Hydroxylgruppen. Dabei ist es bevorzugt, dass das Vernetzungsmittel seinerseits ein Präpolymer darstellt. Beispielsweise kann es ausgewählt sein aus jeweils Hydroxylgruppen-haltigen Polyacrylaten, Polyether, Polyester, Polycarbonaten und Polycarbonat-Polyester sowie Mischungen hiervon.

Das Korrosionsschutzpigment c3) ist vorzugsweise ausgewählt aus anorganischen Pigmenten, die durch Alkalimetallionen austauschbare Kationen 2- oder mehrwertiger Metalle enthalten. Dabei sind insbesondere solche austauschbaren Kationen 2- oder mehrwertiger Metalle bevorzugt, die mit Hydroxylionen, wie sie bei Korrosion der Metalloberfläche entstehen können, in Wasser schwer lösliche Verbindungen bilden. Als "schwerlöslich" werden solche Verbindungen betrachtet, deren Löslichkeitskonstante in Wasser bei Zimmertemperatur (20 °C) unterhalb von 10⁻³² liegt. Demnach sind solche Korrosionsschutzpigmente geeignet, wie sie unter der allgemeinen Bezeichnung "Kationenaustauschmatrix" in dem bereits zitierten Dokument EP-A-1 479 736 aufgeführt sind.

Insbesondere sind Korrosionsschutzpigmente auf Basis von Silicaten mit Schicht- oder Raumnetzstruktur bevorzugt, die austauschfähige Kationen 2- oder mehrwertiger Metalle enthalten. Hierbei bevorzugte Kationen sind die Kationen von Ca, Ce, Zn, Sr, La, Y, Al und Mg. Beispielsweise kann das Korrosionsschutzpigment eine synthetische, amorphe Kieselsäure darstellen, die zumindest teilweise in Form ihres Salzes mit austauschfähigen Calciumionen vorliegt.

Um mit der angestrebten Schichtdicke des organischen Beschichtungsmittels zu korrespondieren, liegt die mittlere Teilchengröße des Korrosionsschutzpigments (D50-Wert, beispielsweise bestimmbar durch Lichtstreumethoden) im Bereich von 0,5 bis 10 µm. Dabei ist eine durchschnittliche Partikelgröße im Bereich von 2 bis 4 µm bevorzugt.

Das Beschichtungsmittel c) enthält neben den aufgeführten Festsubstanzen c1), c2) und c3) eines oder mehrere organische Lösungsmittel und/oder Wasser und kann zusätzlich weitere lacktypische Wirk- oder Hilfsstoffe enthalten. Sind organische Lösungsmittel anwesend, so haben diese vorzugsweise einen Flammpunkt von oberhalb 21 °C. Die Anwesenheit von Lösungsmittel in dem Beschichtungsmittel kommt in der Regel zumindest teilweise daher, dass die Komponenten c1) und/oder c2) als Lösung oder Suspension in organischen Lösungsmitteln geliefert werden.

Beispiele für Lösungsmittel sind: 1-Methoxypropylacetat-2, Solventnaphtha, ggf. in Abmischung mit dibasischem Ester, Butyldiglykolacetat und Methoxyisopropanol. Jedoch sind auch andere organische Lösungsmittel möglich, sofern sie im Aushärtungsschritt d) abgedampft werden können. Die Tabelle der Ausführungsbeispiele enthält weitere Beispiele hierfür.

Vorzugsweise enthält das Beschichtungsmittel als weiteren Hilfsstoff Antiabsetzmittel. Hierfür ist beispielsweise pyrogene Kieselsäure geeignet.

Das Beschichtungsmittel soll eine der Applikationsart angepasste Viskosität bei der Applikationstemperatur aufweisen. Die Viskosität des Mittels wird insbesondere durch das Gewichtsverhältnis von Festkörper zu Lösungsmittel beeinflusst. Vorzugsweise beträgt der Festkörpergehalt des Beschichtungsmittels im Teilschritt c) mindestens 30 Gew.-%, insbesondere mindestens 40 Gew.-%, höchstens jedoch 80 Gew.-%, insbesondere höchstens 70 Gew.-%, jeweils bezogen auf das anwendungsfertige Beschichtungsmittel. Dabei wird unter "Festkörpergehalt" derjenige Stoffanteil verstanden, der beim Abdampfen des Lösungsmittels bei der angestrebten PMT übrig bleibt. Bei dieser Bestimmung des Festkörpergehalts können die Schutzgruppen des Einbrennurethanharzes mit abgespalten werden. Dies ist jedoch für die praktische Bestimmung des Festkörpergehalts nicht von Belang, da die Schutzgruppen nur einen sehr geringen Anteil des gesamten Beschichtungsmittels darstellen und da bei der Bestimmung des Festkörpergehalts durch Abdampfen des Lösungsmittels in der Regel eine Genauigkeit von nicht mehr als 1 % erreicht wird. Für praktische Zwecke ist dies völlig ausreichend.

Die Korrosionsschutzwirkung der im Teilschritt c) aufgebrachten Beschichtung hängt vom Gewichtsverhältnis von Korrosionsschutzpigment c3) zu organischem Bindemittel (d.h. die Summe der Komponenten c1) und c2)) ab. Eine gute Korrosionsschutzwirkung wird erzielt, wenn dieses Verhältnis mindestens 0,1, vorzugsweise mindestens 0,2, und höchstens 0,75, vorzugsweise höchstens 0,6 beträgt. Bei einem geringeren Gewichtsverhältnis lässt die Korrosionsschutzwirkung allmählich nach, höhere Gewichtsverhältnisse wirken sich zunehmend ungünstig auf die Haftung der organischen Beschichtung auf dem Substrat aus.

Das mit dem erfindungsgemäßen Verfahren zu beschichtende Metallblech, vorzugsweise Zinkblech (worunter auch Blech aus Zinklegierungen, die zu mehr als 50 Gew.-% aus Zink bestehen, verstanden wird) kann in Form eines Einzelblechs, in Form eines laufenden Bandes oder als zu Formteilen bereits umgeformtes und ggf. zusammengefügtes Blech vorliegen. Einzelbleche und Formteile können durch Eintauchen in die jeweiligen Behandlungsmittel für die Teilschritte a) und c) oder durch Besprühen mit diesen Mitteln beschichtet werden. Besonders geeignet ist das erfindungsgemäße Verfahren jedoch zur Anwendung im sogenannten no-rinse-Verfahren für laufende Metallbänder. Dabei erfolgen die Teilschritte a) und c) in einem Walzenauftragsverfahren, wobei zwischen diesen Teilschritten und dem Aushärtungsschritt d) keine Spülung mit Wasser vorgenommen wird. Ein solches Verfahren ist besonders umweltfreundlich, da keine belasteten Spülwässer anfallen. Es hat weiterhin den Vorteil, dass keine Behandlungsflüssigkeiten in das Behandlungsbad oder in einen Vorratstank zurücklaufen, nachdem sie mit der Metalloberfläche in Kontakt gebracht worden waren. Dies verhindert ein Verschmutzen der Behandlungsflüssigkeiten. Die Oberfläche von Zinkblech kann vor Anwendung des erfindungsgemäßen Beschichtungsverfahrens walzblank sein, wie es bei frisch hergestellten Bändern der Fall ist. Das Blech kann jedoch bereits als Maßnahme zum temporären Korrosionsschutz oberflächenbehandelt worden sein. Das erfindungsgemäße Verfahren ist auch für Bleche geeignet, die chemisch gealtert oder "vorbewittert" sein können. Wie in der Einleitung erwähnt, dient eine solche Behandlung dazu, den optischen Effekt einer natürlichen Patina nachzuahmen. Für eine solche Vorbewitterung setzt man vorzugsweise verdünnte Lösungen starker Säure wie beispielsweise Schwefelsäure und/oder Salpetersäure ein. Für eine chemische Alterung, die ebenfalls zu einer Patina-ähnlichen Schicht führt, kann man auch alkalische Carbonatlösungen verwenden. In diesem Fall scheiden sich auf der Blechoberfläche Zinkhydroxyde und/oder Zinkcarbonate ab. Dagegen bilden sich im Falle der sauren Vorbewitterung vor allem Zinkoxide.

Weiterhin kann das Zinkblech vor dem erfindungsgemäßen Beschichtungsverfahren einer üblichen Reinigung bzw. Aktivierung unterzogen werden. Dies kann chemisch (alkalische oder saure Reinigung bzw. Beize) oder mechanisch (beispielsweise durch Bürsten) erfolgen.

Das Ergebnis der erfindungsgemäßen Verfahrensfolge ist ein oberflächenbeschichtetes Metallblech, vorzugsweise ein Zinkblech (ggf. in Form von Formteilen), bei dem idealerweise die metallisch-blanke bzw. vorbehandelte Metalloberfläche noch durchscheint. Die Bleche behalten also ihr metallisches bzw. Patina-artiges Aussehen. Aus ästhetischen Gründen ist dies in der Regel besonders gewünscht. Demnach ist auch in der Regel nicht vorgesehen, die mit dem erfindungsgemäßen Verfahren erhaltene Beschichtung weiter über zu lackieren. Ausgeschlossen ist dies jedoch nicht, da eine Lackschicht auf der im Teilschritt c) aufgebrachten organischen Beschichtung wesentlich besser haftet als auf einem nicht vorbehandelten Blech. Auch ohne weitere Überlackierung kann erwünschtenfalls der Eindruck einer lackierten Metalloberfläche dadurch erzeugt werden, dass man dem Beschichtungsmittel für den Teilschritt c) Farbstoffe oder Farbpigmente zusetzt.

Durch das erfindungsgemäße Beschichtungsverfahren werden die eingangs aufgeführten Ziele erreicht: Die Beständigkeit von Zinkblech gegen Weißrostbildung (beispielsweise messbar in einem Klimatest nach DIN 50017 KW) wird verbessert. Zu Beginn eines Freibewitterungstests erfolgt keine Abschwemmung von Zinkionen, beispielsweise durch Ablösen von vorgebildeten Korrosionsprodukten auf der Zinkoberfläche. Die Abschwemmung von Zinkionen im Langzeittest wird gegenüber einer unbehandelten Zinkoberfläche deutlich vermindert. Die aufgebrachte Beschichtung ist weitgehend lichtbeständig, so dass in einem UV-Test keine Auskreidungen, Verfärbungen oder Risse entstehen. Durch den verbesserten Langzeit-Korrosionsschutz wird also vor allem das Ziel erreicht, den Eintrag von Zink in ablaufendes Regenwasser und/oder in den Boden deutlich zu verringern.

Weiterhin erfüllt die mit dem erfindungsgemäßen Verfahren erzeugte Beschichtung die Anforderung an Lackhaftung beim Umformen der beschichteten Bleche. Fügeverfahren wie insbesondere Löten werden durch die erfindungsgemäß aufgebrachte Beschichtung nicht behindert. Die Beschichtung ist dünn genug, dass sie beim Vorbereiten von Lötstellen durch Auftragen von (saurem oder alkalischem) Lötwasser durchdrungen und beim Anätzen der Zinkoberfläche durch das Lötwasser abgesprengt wird. Die erfindungsgemäß beschichteten Bleche können also wie üblich gelötet werden, ohne dass besondere Maßnahmen zur Vorbereitung des Lötens erforderlich sind.

Ein Gegenstand der vorliegenden Erfindung ist weiterhin ein Metallblech, insbesondere ein Zinkblech, das eine Beschichtung trägt, die nach dem beschriebenen erfindungsgemäßen Verfahren erhältlich ist, ein Formteil aus einem derartigen Metallblech oder ein Gegenstand, der ein derartiges Metallblech oder ein Formteil hieraus enthält.

Weiterhin betrifft die vorliegende Erfindung die Verwendung eines derartigen Metallblechs, Formteils oder Gegenstands im Außenbereich von Gebäuden. Beispiele erfindungsgemäß beschichteter Zinkbleche bzw. Zinkblech-Formteile und ihrer Verwendung sind Bauteile zum Verkleiden von Dächern, Fassaden, Gauben und anderen Gebäudeteilen. Formteile können beispielsweise als Dachentwässerungssysteme wie Regenrinnen und Fallrohre dienen. Weiterhin können sie als Teile von Solaranlagen Verwendung finden. Weitere Verwendungsbeispiele sind Abdeckungen für Fensterbänke oder als Tore.

All diesen unterschiedlichen Verwendungen ist gemeinsam, dass die erfindungsgemäß beschichtete Zinkoberfläche den Einflüssen von Witterung und Sonnenlicht ausgesetzt ist. Durch Anwendung des erfindungsgemäßen Beschichtungsverfahrens wird die Beständigkeit der Zinkoberfläche gegenüber diesen Einflüssen im Vergleich zu unbehandeltem oder herkömmlich behandeltem Zinkblech deutlich verbessert. Das Umweltschutzziel des verminderten Zinkeintrags wird erreicht.

### Ausführungsbeispiele

Auf vorbewitterte Zinkbleche (Firma Rheinzink, TAC schiefergrau, 0,7 mm Dicke) wurde eine kommerzielle no-rinse-Konversionslösung (Granodine^{R}1456, Henkel KGaA, Düsseldorf) mit einem Laborcoater, d. h. im Walzenauftrag aufgebracht. Diese saure wässrige Konversionslösung war frei von Chrom und Silanen und enthielt komplexe Fluoride von Titan und Zirkon, Phosphorsäure, Manganionen, 1-Hydroxyethan-1,1-diphosphonsäure und ein n-Methylglucamin-substituiertes Polyvinylphenol gemäß den in der Beschreibung zitierten Druckschriften EP-B-319 016 und EP-B-319 017. Diese Behandlungslösung wurde ohne Spülung mit Wasser in einem Umluftofen mit einer Ofentemperatur von 180 °C eingetrocknet. Die Zeitdauer zwischen Auftrag und Überführen in den Ofen betrug etwa 10 Sekunden. Die Bleche verblieben etwa 12 Sekunden im Ofen, wobei eine Substrattemperatur (PMT) von 80 °C erreicht wurde. Die Schichtauflage betrug 10 mg Ti pro m².

Anschließend wurden Beschichtungsmittel gemäß nachstehenden Tabellen mit einem Spiralrakel aufgebracht. Die beschichteten Bleche wurden ohne Wasserspülung in einem Umluftofen mit einer Ofentemperatur von 280 °C ausgehärtet. Die Verweildauer im Ofen betrug etwa 38 Sekunden, wobei eine PMT von 180 °C erreicht wurde. Die Schichtdicken nach Aushärten lagen bei etwa 8 µm.

An den beschichteten Blechen wurden Standardtests für Korrosionsschutz, Lackhaftung und Lichtbeständigkeit durchgeführt:
Kondenswassertest nach deutscher Norm DIN 50017 KFW (Wechselklima). Der Test umfasst sich wiederholende Zyklen, wobei die Bleche in einer Prüfkammer mit beheizbarer Wasserwanne in feuchter Atmosphäre so gelagert werden, dass sich auf ihnen Kondenswasser bildet. Nach 8 Stunden wird die Prüfkammer geöffnet oder belüftet. In diesem Zustand verbleibt die Prüfkammer für 16 Stunden. Danach wird sie geschlossen und der Zyklus beginnt von neuem. In den Tabellen ist die Zahl der Zyklen bis zum Auftreten von Weißrost angegeben. Je mehr Zyklen erreicht werden, desto besser ist die Korrosionsschutzwirkung. Spätestens nach 25 Zyklen wurde der Test beendet.

Haftfestigkeitsprüfung nach Eindrücken gemäß deutscher Norm DIN EN ISO 13523-6 (englische Bezeichnung: cupping test). Hierbei wird das beschichtete Prüfblech mit einem Schneidwerkzeug mit einem Gitterschnitt versehen (mindestens 6 parallele, 1 mm voneinander entfernte Schnitte, zusammen mit mindestens 6 zusätzlichen ähnlichen Schnitten im rechten Winkel dazu). Jeder Schnitt muss gerade bis zum metallischen Substrat durchgehen. Mit einer Tiefungsvorrichtung wird das Prüfblech an der Stelle des Gitterschnitts durch Eindrücken eines Stößels von der Rückseite ausgebeult. Die Eindrucktiefe beträgt etwa 80 % der Tiefe, bei der das metallische Substrat reißt. Zur Bewertung der Haftfestigkeit wird auf die Beschichtung an der Stelle des Gitterschnitts ein Klebeband gleichmäßig aufgeklebt und danach abgezogen. Die Haftfestigkeit des Beschichtung wird danach beurteilt, wie viele der durch den Gitterschnitt entstandenen Quadrate abgelöst werden. Die Bewertung erfolgt entsprechend der Norm für die Gitterschnittprüfung (DIN EN ISO 2409). Hierfür wird durch optische Beurteilung ein Gitterschnitt-Kennwert zwischen G 0 und G 5 gemäß der in der Norm angegebenen Abbildung festgelegt. Bei G 0 sind die Schnittränder vollkommen glatt und keines der Quadrate des Gitters ist abgeplatzt. Bei G 1 sind an den Schnittpunkten der Gitterlinien kleine Splitter der Beschichtung abgeplatzt. Die abgeplatzte Fläche ist nicht wesentlich größer als 5 % der Gitterschnittfläche. Höhe Gitterschnitt-Kennwerte geben jeweils ein stärkeres Abplatzen der Beschichtung an.

Gitterschnittprüfung nach DIN EN ISO 2409. Diese Prüfung erfolgt analog der vorstehend beschriebenen Haftfestigkeitsprüfung nach Eindrücken, wobei jedoch die Verformung des Probeblechs durch Eindrücken unterbleibt.

Lichtbeständigkeitsprüfung nach ECCA-Testmethode T10. Hierbei werden die Prüfbleche in einer Testkammer in zyklischer Weise Licht, Wasser, erhöhter Temperatur und feuchter Atmosphäre ausgesetzt. Die Bleche werden insgesamt für 500 Stunden mit einer UV-B-Lampe bestrahlt. Die anschließende Bewertung erfolgt nach deutscher Norm DIN 53230 gemäß dortiger Tabelle 2 mit einer relativen Bewertungsskala, die von 0 bis 5 reicht: Kennzahl 0: nicht verändert; Kennzahl 1: Spur verändert; Kennzahl 2: gering verändert; Kennzahl 3: mittel verändert; Kennzahl 4: stark verändert; Kennzahl 5: sehr stark verändert.

Die Prüfergebnisse sind in den nachstehenden Tabellen enthalten. Die Rezepturen Nr. 2, 19 und 20 sind nicht erfindungsgemäße Vergleichsbeispiele (kein oder zu wenig aliphatisches Einbrennurethanharz). Die übrigen Rezepturen sind erfindungsgemäß. Gehaltsangaben in Gew.-%

| **Tabelle 1** | | | | | | | | | | | | | | | | | | |
|---|---|---|---|---|---|---|---|---|---|---|---|---|---|---|---|---|---|---|
| **Rezeptur** | 1 | 2 | 3 | 4 | 5 | 6 | 7 | 8 | 9 | 10 | 11 | 12 | 13 | 14 | 15 | 16 | 17 | 18 |
| **Blockiertes, aliphatisches vemetzendes Einbrennurethanharz auf Basis Hexamethylendiisocyanat** | 12,5 | | | | | 12,5 | | | 18,0 | | | | | | | 12 | | |
| **Blockiertes, aliphatisches vemetzendes Einbrennurethanharz auf Basis Isophorondiisocyanat** | | | 12,5 | 12,5 | 13,0 | | 11,5 | 12,5 | | 12,5 | 12,5 | 12,5 | | 7 | 14 | | 30 | |
| **Blockiertes, aromatisches vemetzendes Einbrennurethanharz auf Basis Toluylendiisocyanat** | | 12,5 | | | | | | | | | | | | | | | | |
| **Synthetische amorphe Kieselsäure, Kalzium-Ionen modifiziert** | 14,2 | 15,0 | | 14,0 | 15,0 | | 6,0 | 14,0 | 15,0 | 7,1 | 14,2 | 14,2 | 15 | | | | 13,5 | |
| **Mehrphasenpigment auf Basis Zinkphosphat org. Inhibitorenen enthaltend** | | | 15,5 | | | 29,0 | | | | 7,1 | | | | 12 | 12 | | | 15 |
| **Mehrphasenpigment auf Basis Zinkphosphat** | | | | | | | | | | | | | | | | 4,5 | | |
| **Pyrogene Kieselsäure >99,5% Pyrogene Kieselsäure Siliciumdioxid** | 1,3 | 1,0 | 1,5 | 1,0 | | | 0,5 | 1,0 | | 1,3 | 2,0 | 1,3 | 1 | 1,5 | | | | 1,5 |
| **Hydroxylgruppenhaltiges Polyacrylat** | | 23,5 | | | | | | | | 23,5 | | | | | | 20 | | |

| **Rezeptur** | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| **Linearer, aliphatischer Polycarbonat Polyester** | | | | 23,5 | | | | | | | | | | | | | 10 | |
| **Lineares, aliphatisches Polycarbonatdiol** | 23,5 | | 23,5 | | | | 10,0 | 22,0 | | | 22,5 | 23,5 | | | | | | |
| **Polyether** | | | | | 18,0 | | | | | | | | | | | | | |
| **gesättigter Polyester, hochmolekular, hydroxyfunktionell M 10-30000 g/mol** | | | | | | 12,0 | 5,0 | | 12,0 | | | | 30 | 23 | 20 | | | 15 |
| **gesättigter Polyester, niedermolekular, hydroxyfunktionell M 1000-7000 g/mol** | | | | | | 20,5 | | | 2,0 | | | | 5 | 5 | 5 | | | |
| **HMMM-Harz (Melamin-Formaldehyd-Harz)** | | | | | 10,0 | | | 0,7 | | | 0,7 | 1,0 | 10 | 10 | 6 | 1 | | 10 |
| **1-Methoxy-2-propanol** | 14,2 | 3,4 | 5,4 | 5,4 | 5,6 | 11,1 | 4,9 | 5,4 | 9,1 | 5,4 | 5,4 | 5,4 | 2,7 | 7,1 | 8,7 | 5,3 | 12,8 | 11,5 |
| **2-Methoxy-1-methylethylacetat** | 5,9 | 18,0 | | 22,3 | 13,5 | | 17,1 | 15,3 | 12,9 | 12,3 | 2,9 | 3,8 | | 5,2 | | 18 | 5 | 6,5 |
| **Butyldiglykolacetat** | | | 16,2 | | | 12,0 | 5,0 | | 12,0 | 5,2 | 5,0 | 18,0 | 30 | 23 | 20 | 16,7 | 15,3 | 26 |
| **Dibasenester** | 25,5 | 14,0 | 7,4 | | 23,4 | | 25,0 | 25,0 | 15,0 | 25,0 | 15,0 | 20,0 | | 3,7 | 12 | 9 | 13,4 | |
| **n-Butylacetat** | | 10,0 | | 5,8 | | 2,9 | | 3,9 | 4,0 | 0,6 | 5,3 | | 3,8 | | 0,8 | 2,7 | | |
| **Solvesso 100 (C₉₋₁₀-Kohlenwasserstoffe, aromatisch)** | 2,9 | 2,6 | | 15,5 | 1,5 | | 15,0 | | | | 14,0 | | | | | | | |
| **Solvesso 150 (C₁₀₋₁₁-Kohlenwasserstoffe, aromatisch)** | | | 18,0 | | | | | | | | | | | | | | | |
| **Isobutanol** | | | | | | | | 0,2 | | | 0,2 | 0,3 | 2,5 | 2,5 | 1,5 ' | 0,3 | | 2,5 |
| **Summe** | 100 | 100 | 100 | 100 | 100 | 100 | 100 | 100 | 100 | 100 | 100 | 100 | 100 | 100 | 100 | 90 | 100 | 88 |
| **Bindemittelgehalt** | 36,0 | 36,0 | 36,0 | 36,0 | 41,0 | 45,0 | 26,5 | 35,2 | 32,0 | 36,0 | 35,7 | 37,0 | 45,0 | 45,0 | 45,0 | 33,0 | 40,0 | 25,0 |
| **Lösemittelgehalt** | 48,5 | 48,0 | 47,0 | 49,0 | 44,0 | 26,0 | 67,0 | 49,8 | 53,0 | 48,5 | 47,8 | 47,5 | 39,0 | 41,5' | 43,0 | 52,0 | 46,5 | 46,5 |
| **Pigmentgehalt** | 15,5 | 16,0 | 17,0 | 15,0 | 15,0 | 29,0 | 6,5 | 15,0 | 15,0 | 15,5 | 16,2 | 15,5 | 16,0 | 13,5 | 12,0 | 4,5 | 13,5 | 16,5 |
| **Verhältnis Pigment/Bindemittel** | 0,43 | 0,44 | 0,47 | 0,42 | 0,37 | 0,64 | 0,25 | 0,43 | 0,47 | 0,43 | 0,45 | 0,42 | 0,36 | 0,30 | 0,27 | 0,14 | 0,34 | 0,66 |
| **Festkörper** | 51,5 | 52,0 | 53,0 | 51.0 | 56,0 | 74,0 | 33,0 | 50,2 | 47,0 | 51,5 | 51,9 | 52,5 | 61,0 | 58,5 | 57,0 | 37,5 | 53,5 | 41,5 |
| **Kondenswasserwechseltest DIN 50017 KFW** | >25 | >25 | 20 | >25 | 25 | 20 | 15 | >25 | >25 | 20 | 20 | 25 | 25 | 20 | 20 | 5 | >25 | 20 |
| **Haftfestigkeit nach Eindrücken DIN EN ISO 13523-6** | G0 | G0 | G0 | G0-1 | G0 | G0-1 | G0-1 | G0-1 | G0 | G0 | G0 | G0 | G2 | G2 | G0-1 | G0-1 | G0 | G2 |
| **Gitterschnitt DIN EN ISO 2409** | G0 | G0 | G1 | G0-1 | G0 | G0 | G0-1 | G0-1 | G0 | G0 | G0 | G0 | G2 | G0-1 | G0-1 | G0-1 | G0 | G2 |
| **ECCA T10, 500h UV-B, Bewertung DIN 53230, Tabelle 2, Relative Bewertungsskala** | 1 | 4 | 1 | 0 | 1 | 0 | 0 | 0 | 0 | 0 | 0 | 0 | 0 | 0 | 0 | 1 | 0 | 1 |

**Tabelle 2**

| **Rezeptur** | 19 | 20 | 21 | 22 | 23 | 24 | 25 | 26 | 27 | 28 | 29 | 30 | 31 | 32 | 33 | 34 | 35 | 36 |
|---|---|---|---|---|---|---|---|---|---|---|---|---|---|---|---|---|---|---|
| **Blockiertes, aliphatisches vernetzendes Einbrennurethanharz auf Basis Hexamethylendiisicyanat** | 6,3 | | | | | 12,5 | | | 11,0 | | 6,5 | | 12,5 | | | 12,0 | 15,0 | 6,3 |
| **Blockiertes, aliphatisches vemetzendes Einbrennurethanharz auf Basis Isophorondiisocyanat** | | 6,3 | 12,5 | 12,5 | 13,0 | | 11,5 | 12,5 | 7,0 | 12,5 | 6,3 | 12,5 | | 14,0 | 13,5 | | 15,0 | |
| **Blockiertes, aromatisches vemetzendes Einbrennurethanharz auf Basis Toluylendiisocyanat** | 6,3 | 6,3 | | | | | | | | | | | | | | | | |
| **Synthetische amorphe Kieselsäure Kalzium-lonen modifiziert** | 14,2 | 15,0 | | 14,0 | 15,0 | 13,0 | 6,0 | 14,0 | 15,0 | 7,1 | 14,2 | 14,2 | 15 | | | 10 | 13,5 | |
| **Mehrphasenpigment auf Basis Zinkphosphat org. Inhibitorenen enthaltend** | | | 15,5 | | | | | | | 7,1 | | | | 12 | 12 | | | 12 |
| **Mehrphasenpigment auf Basis Zinkphosphat** | | | | | | | | | | | | | | | | 5 | | |
| **Pyrogene Kieselsäure >99,5% Siliciumdioxid** | 1,3 | 1,0 | 1,5 | 1,0 | | | 0,5 | 1,0 | | 1,3 | 1,3 | 1,3 | 1 | 1,5 | | | | 1,5 |
| **Hydroxylgruppenhaltiges Poyacrylat** | | 23,5 | | | | | | | | 18,0 | | 13,5 | | | | 20,0 | | 12,0 |
| **Linearer, aliphatischer Polycarbonat-Polyester** | | | | 23,5 | | | | | | | | | | | | | 10,0 | |
| **Polyether** | | | 11,5 | 12,5 | 12,5 | | 5,0 | | | 5,5 | | | | | | | | |
| **gesättigter Polyester, hochmolekular, hydroxyfunktionell M 10-30000 g/mol** | | | | | | 12,0 | 5,0 | 4,0 | 12,0 | | | | 25,0 | 13,0 | 20,0 | 20,0 | | 10,0 |
| **gesättigter Polyester, niedermolekular, hydroxyfunktionell M 1000-7000 g/mol** | | | | | | 10,5 | | | 2,0 | | | | 5,0 | 5,0 | 5,0 | | | |
| **HMMM-Harz (Melamin-Formaldehyd-Harz)** | | | | | | | | 0,7 | | | 0,7 | 1,0 | 10,0 | 10,0 | 6,0 | 1,0 | | 3,1 |
| **1 Methoxy 2 propanol** | 18,0 | 10,5 | 12,0 | 10,6 | 15,0 | 10,2 | 19,0 | 12,0 | 9,0 | 13,5 | 12,3 | 12,3 | | 4,8 | 13,0 | 16,1 | 13,5 | |
| **2 Methoxy 1 methylethylacetat** | 12,0 | 4,4 | 5,4 | 5,4 | 5,6 | 16,9 | 4,9 | 5,4 | 16,5 | 5,4 | 13,4 | 5,4 | 8,0 | 14,2 | 8,5 | 5,3 | 12,8 | 4,6 |
| **Buthyldiglykolacetat** | | | | 11,0 | 13,0 | 10,0 | 13,1 | | 11,5 | 12,5 | 10,2 | 5,2 | 5,0 | | | 12,0 | 8,3 | |
| **Dibasenester** | 12,0 | 23,0 | 25,0 | 22,0 | 15,9 | 12,0 | 25,0 | 18,9 | 12,0 | 0,6 | 9,5 | 24, 3 | 16,0 | 23,0 | 20,0 | 7,1 | 11,9 | 26,0 |
| **n Butylacetat** | 5,0 | 10,0 | | | | | | 6,8 | | 11,0 | | | | | | 8,6 | | 5,0 |
| **Solvesso 100 (C₉₋₁₀-Kohlenwasserstoffe, aromatisch)** | 1,5 | | 5,1 | | | 2,9 | | | 4,0 | 5,5 | 2,9 | | | | | 2,7 | | |
| **Solvesso 150 (C₁₀₋₁₁₋Kohlenwasserstoffe, aromatisch)** | | | | | | | 5,0 | 6,5 | | | | | | | | | | |
| **Isobutanol** | | | | | | | | 0,2 | | | 0,2 | 0,3 | 2,5 | 2,5 | 1,5 | 0,3 | | 2,5 |
| **Summe** | 100 | 100 | 100 | 100 | 100 | 100 | 100 | 100 | 100 | 100 | 100 | 100 | 100 | 100 | 100 | 100 | 100 | 83 |
| **Bindemittelgehalt** | 36,0 | 36,1 | 24,0 | 36.0 | 35,5 | 35,0 | 26,5 | 35,2 | 32,0 | 36,0 | 36,0 | 37,0 | 52,5 | 42,0 | 45,0 | 33,0 | 40,0 | 31,4 |
| **Lösemittelgehalt** | 48,5 | 47,9 | 47,5 | 49,0 | 49,5 | 52,0 | 67,0 | 49,8 | 53,0 | 48,5 | 48,5 | 47,5 | 31,5 | 44,5 | 43,0 | 52,0 | 46,5 | 38,1 |
| **Pigmentgehalt** | 15,5 | 16,0 | 17,0 | 15,0 | 15,0 | 13,0 | 6,5 | 15,0 | 15,0 | 15,5 | 15,5 | 15,5 | 16,0 | 13,5 | 12,0 | 15,0 | 13,5 | 13,5 |
| **Verhältnis Pigment/Bindemittel** | 0,43 | 0,44 | 0,71 | 0,42 | 0,42 | 0,37 | 0,25 | 0,43 | 0,47 | 0,43 | 0,43 | 0,42 | 0,30 | 0,32 | 0,27 | 0,45 | 0,34 | 0,43 |
| **Festkörper** | 51,5 | 52,1 | 41,0 | 51,0 | 50.5 | 48,0 | 33,0 | 50,2 | 47,0 | 51,5 | 51,5 | 52,5 | 68,5 | 55,5 | 57,0 | 48,0' | 53,5 | 44,9 |
| **Kondenswasserwechseltest DIN 50017 KFW** | >25 | >25 | 25 | >25 | 25 | 20 | 15 | >25 | >25 | 20 | 20 | 25 | >25 | 20 | 20 | 25 | >25 | 20 |
| **Haftfestigkeit nach Eindrücken DIN EN ISO 13523-6** | G0 | G0 | G0 | G0-1 | G0 | G0-1 | G0-1 | G0 | G0 | G0 | G0 | G0 | G0 | G0 | G0 | G0-1 | G0 | G2 |
| **Gitterschnitt DIN EN ISO 2409** | G0 | G0 | G0 | G0-1 | G1 | G0 | G0-1 | G0 | G0 | G0 | G0 | G1 | G0 | G0 | G0 | G0-1 | G0 | G2 |
| **ECCA T10, 500h UV-B, Bewertung DIN 53230, Tabelle 2, Relative Bewertungsskala** | 3 | 3 | 1 | 0 | 1 | 0 | 0 | 0 | 0 | 0 | 0 | 0 | 0 | 0 | 0 | 1 | 0 | 1 |

## Patentansprüche

1. Verfahren zur Beschichtung von Metallen ausgewählt aus Aluminium und seinen Legierungen, Zink und seinen Legierungen sowie verzinktem oder legierungsverzinktem Stahl, wobei man das Metall erforderlichenfalls reinigt,
a) einer als solche im Stand der Technik bekannten Konversionsbehandlung durch Kontakt mit einer Konversionslösung unterzieht, die mindestens ein einfaches oder komplexes Salz mindestens eines Metalls M enthält, wobei eine Konversionsschicht erzeugt wird, die 0,01 bis 0,7 mmol/m² des Metalls M enthält,
b) erwünschtenfalls mit Wasser spült und/oder trocknet,
c) mit einem Beschichtungsmittel in Kontakt bringt, das
c1) insgesamt 5 bis 30 Gew.-% eines oder mehrerer vernetzender Einbrennurethanharze, die blockierte Isocyanatgruppen tragen, wobei nicht mehr als 5 % der vorhandenen Kohlenstoffatome in aromatischen und/oder ungesättigten Gruppierungen vorliegen,
c2) insgesamt 10 bis 30 Gew.-% eines oder mehrerer Vernetzungsmittel für die Komponente c1,
c3) 4 bis 30 Gew.-% eines oder mehrerer Korrosionsschutzpigmente,
und als Rest eines oder mehrere organische Lösungsmittel und/oder Wasser sowie erwünschtenfalls weitere Wirk- oder Hilfsstoffe enthält,
und danach
d) die im Teilschritt c) erhaltene Beschichtung durch Erwärmen auf mindestens 100 °C Substrattemperatur aushärtet.

2. Verfahren nach Anspruch 1, **dadurch gekennzeichnet, dass** man zur Konversionsbehandlung a) eine saure wässrige chromfreie Lösung einsetzt, die das Metall M in Form komplexer Fluoride enthält.

3. Verfahren nach einem oder beiden der Ansprüche 1 und 2, **dadurch gekennzeichnet, dass** man im Teilschritt c) eine solche Menge des Beschichtungsmittels aufbringt, dass man nach dem Aushärtungsschritt d) eine Schichtdicke im Bereich von 3 bis 35 µm, vorzugsweise im Bereich vom 6 bis 20 µm erhält.

4. Verfahren nach einem oder mehreren der Ansprüche 1 bis 3, **dadurch gekennzeichnet, dass** das Einbrennurethanharz c1 mit einer Schutzgruppe blockiert ist, die bei einer Temperatur im Bereich von 100 bis 180 °C abspaltet.

5. Verfahren nach einem oder mehreren der Ansprüche 1 bis 4, **dadurch gekennzeichnet, dass** das Vernetzungsmittel c2 ausgewählt ist aus jeweils hydroxylgruppenhaltigen Polyacrylaten, Polyether, Polyester, Polycarbonaten und Polycarbonat-Polyester bzw. deren Mischungen.

6. Verfahren nach einem oder mehreren der Ansprüche 1 bis 5, **dadurch gekennzeichnet, dass** das Korrosionsschutzpigment c3 ausgewählt ist aus anorganischen Festkörpern, die durch Alkalimetallionen austauschbare Kationen zwei- oder mehrwertiger Metalle enthalten.

7. Verfahren nach einem oder mehreren der Ansprüche 1 bis 6, **dadurch gekennzeichnet, dass** der Festkörpergehalt des Beschichtungsmittels im Teilschritt c) mindestens 30 Gew.-%, vorzugsweise mindestens 40 Gew.-% und höchstens 80 Gew.-%, vorzugsweise höchstens 70 Gew.-% beträgt.

8. Verfahren nach einem oder mehreren der Ansprüche 1 bis 7, **dadurch gekennzeichnet, dass** das Gewichtsverhältnis Korrosionsschutzpigment c3 zu Bindemittel c1 + c2 mindestens 0,1, vorzugsweise mindestens 0,2, und höchstens 0,75, vorzugsweise höchstens 0,6 beträgt.

9. Verfahren nach einem oder mehreren der Ansprüche 1 bis 8, **dadurch gekennzeichnet, dass** das Metall in Form eines laufenden Bandes beschichtet wird und dass die Teilschritte a) und c) in einem Walzenauftragsverfahren erfolgen, wobei zwischen diesen Teilschritten und dem Aushärtungsschritt d) keine Spülung mit Wasser vorgenommen wird.

10. Verfahren nach einem oder mehreren der Ansprüche 1 bis 9, **dadurch gekennzeichnet, dass** die nach Durchführung dieses Verfahrens erhaltene Beschichtung nicht überlackiert wird.

11. Metallblech, das eine Beschichtung trägt, die nach dem Verfahren nach einem oder mehreren der Ansprüche 1 bis 10 erhältlich ist, Formteil aus einem derartigen Metallblech oder Gegenstand, der ein derartiges Metallblech oder ein Formteil hieraus enthält.

12. Verwendung eines Metallblechs, eines Formteils oder eines Gegenstandes nach Anspruch 11 im Außenbereich von Gebäuden.

## Claims

1. Process for coating metals selected from aluminium and its alloys, zinc and its alloys as well as galvanised or alloy-galvanised steel, wherein the metal is cleaned if necessary,
a) using a conversion treatment known from the prior art to contact said metal with a conversion solution that comprises at least one simple or complex salt of at least one metal M, such that a conversion layer that contains 0.01 to 0.7 mmol/m² of metal M is produced,
b) optionally rinsing with water and/or drying,
c) contacting with a coating agent that comprises
c1) a total of 5 to 30 wt % of one or more crosslinking baking urethane resins that carry blocked isocyanate groups, wherein not more than 5 % of the carbon atoms present are found in aromatic and/or unsaturated groups,
c2) a total of 10 to 30 wt % of one or more crosslinking agents for the components c1,
c3) 4 to 30 wt % of one or more anti-corrosion pigments,
and comprising as the remainder one or more organic solvents and/or water as well as optionally additional active substances or auxiliaries, and then
d) curing the coating resulting from the partial step c) by heating to a substrate temperature of at least 100 °C.

2. Process according to claim 1, **characterised in that** an acidic aqueous chromium-free solution that comprises the metal M in the form of complex fluorides is used for the conversion treatment a).

3. Process according to one or both of the claims 1 and 2, **characterised in that** in the partial step c), the coating agent is applied in such an amount that there results a layer thickness in the range 3 to 35 µm, preferably in the range 6 to 20 µm after the curing step d).

4. Process according to one or more of the claims 1 to 3, **characterised in that** the baking urethane resin c1 is blocked with a protective group that splits off in the temperature range of 100 to 180 °C.

5. Process according to one or more of the claims 1 to 4, **characterised in that** the crosslinking agent c2 is selected from hydroxyl group-containing polyacrylates, polyethers, polyesters, polycarbonates, and polycarbonate-polyesters or mixtures thereof.

6. Process according to one or more of the claims 1 to 5, **characterised in that** the anti-corrosion pigment c3 is selected from inorganic solids that comprise cations of bivalent or multivalent metals that are exchangeable for alkali metal ions.

7. Process according to one or more of the claims 1 to 6, **characterised in that** the solids content of the coating agent in step c) is at least 30 wt %, preferably at least 40 wt % and not more than 80 wt %, preferably not more than 70 wt %.

8. Process according to one or more of the claims 1 to 7, **characterised in that** the weight ratio of anti-corrosion pigment c3 to binders c1 + c2 is at least 0.1, preferably at least 0.2, and at most 0.75, preferably at most 0.6.

9. Process according to one or more of the claims 1 to 8, **characterised in that** the metal is coated in the form of a continuous strip and that the partial steps a) and c) are accomplished in a roller-coating process, wherein no rinsing with water is effected between said partial steps and the curing step d).

10. Process according to one or more of the claims 1 to 9, **characterised in that** the coating obtained by carrying out this process is not over-coated.

11. Metal sheet that carries a coating that is obtainable according to the process according to one or more of the claims 1 to 10, moulded article from a metal sheet of this type or object that comprises a metal sheet of this type or a moulded article thereof.

12. Use of a metal sheet, of a moulded article or of an object according to claim 11 in the exterior of buildings.

## Revendications

1. Procédé pour l'enduction de métaux choisis parmi l'aluminium et ses alliages, le zinc et ses alliages ainsi que l'acier zingué ou zingué allié, dans lequel on nettoie le métal en fonction des nécessités,
a) on le soumet à un traitement de conversion connu en soi dans l'état de la technique par mise en contact avec une solution de conversion qui contient au moins un sel simple ou complexe d'au moins un métal M, pour obtenir une couche de conversion qui contient de 0,01 à 0,7 mmol/m² du métal M ;
b) si on le souhaite, on le rince avec de l'eau et/ou on le sèche ;
c) on l'amène en contact avec un agent d'enduction qui contient
c1) au total de 5 à 30 % en poids d'une ou de plusieurs résines thermodurcissables de réticulation à base d'uréthane, qui portent des groupes isocyanate bloqués, pas plus de 5 % des atomes de carbone qu'elles contiennent étant présents dans des groupements aromatiques et/ou insaturés ;
c2) au total de 10 à 30 % en poids d'un ou de plusieurs agents de réticulation pour le composant c1 ;
c3) de 4 à 30 % en poids d'un ou de plusieurs pigments de protection contre la corrosion ;
et, comme reste, un ou plusieurs solvants organiques et/ou de l'eau ainsi que, si on le souhaite, des substances actives ou des substances auxiliaires supplémentaires ;
et ensuite
d) on durcit l'enduction obtenue à l'étape partielle c) par réchauffement à une température minimale du substrat de 100 °C.

2. Procédé selon la revendication 1, **caractérisé en ce qu'**on met en oeuvre pour le traitement de conversion a), une solution aqueuse acide exempte de chrome qui contient le métal M sous la forme de fluorures complexes.

3. Procédé selon l'une quelconque des revendications 1 et 2 ou selon les deux, **caractérisé en ce qu'**on applique, à l'étape partielle c), une quantité de l'agent d'enduction telle que l'on obtient après l'étape de durcissement d) une épaisseur de couche dans la plage de 3 à 35 µm, de préférence dans la plage de 6 à 20 µm.

4. Procédé selon une ou plusieurs des revendications 1 à 3, **caractérisé en ce que** la résine thermodurcissable c1 à base d'uréthane est bloquée avec un groupe de protection qui se sépare à une température dans la plage de 100 à 180°C.

5. Procédé selon une ou plusieurs des revendications 1 à 4, **caractérisé en ce que** l'agent de réticulation c2 est choisi parmi des polyacrylates, des polyéthers, des polyesters, des polycarbonates et des polycarbonates-polyesters, contenant à chaque fois des groupes hydroxyle, respectivement leurs mélanges.

6. Procédé selon une ou plusieurs des revendications 1 à 5, **caractérisé en ce que** le pigment de protection contre la corrosion c3 est choisi parmi des corps solides inorganiques qui contiennent des cations de métaux divalents ou polyvalents, qui peuvent être échangés contre des ions de métaux alcalins.

7. Procédé selon une ou plusieurs des revendications 1 à 6, **caractérisé en ce que** la teneur de l'agent d'enduction en corps solides à l'étape partielle c) s'élève à au moins 30 % en poids, de préférence à au moins 40 % en poids, et au maximum à 80 % en poids, de préférence au maximum à 70 % en poids.

8. Procédé selon une ou plusieurs des revendications 1 à 7, **caractérisé en ce que** le rapport pondéral du pigment de protection contre la corrosion c3 aux liants c1 + c2 s'élève à au moins 0,1, de préférence à au moins 0,2, et au maximum à 0,75, de préférence au maximum à 0,6.

9. Procédé selon une ou plusieurs des revendications 1 à 8, **caractérisé en ce qu'**on enduit le métal sous la forme d'un ruban qui défile et **en ce que** les étapes partielles a) et c) sont mises en oeuvre dans un procédé d'application au rouleau, aucun rinçage avec de l'eau n'ayant lieu entre ces étapes partielles et l'étape de durcissement d).

10. Procédé selon une ou plusieurs des revendications 1 à 9, **caractérisé en ce que** l'enduction que l'on obtient après la mise en oeuvre de ce procédé n'est pas soumise à un revernissage.

11. Tôle métallique qui porte une enduction que l'on obtient conformément au procédé selon une ou plusieurs des revendications 1 à 10, élément façonné constitué d'une tôle métallique de ce type ou objet qui contient une tôle métallique de ce type ou un élément façonné constitué de cette dernière.

12. Utilisation d'une tôle métallique, d'un élément façonné ou d'un objet selon la revendication 11, à l'extérieur de bâtiments.
